# EUROPÄISCHE PATENTSCHRIFT

(11) **EP 1 669 715 B1**
(45) Veröffentlichungstag und Bekanntmachung des Hinweises auf die Patenterteilung: **13.08.2008**
(21) Anmeldenummer: 06111762.8
(22) Anmeldetag: 29.08.2001
(51) Int. Cl.: G01B 11/275

(54) **Fahrwerkvermessungseinrichtung**
Chassis measurement device
Dispositif de contrôle de la géométrie d'un chassis

(30) Priorität: 02.09.2000 DE 10043354
(43) Veröffentlichungstag der Anmeldung: 14.06.2006
(62) Teilanmeldung aus: 01120596.0
(73) Patentinhaber: Beissbarth GmbH, 80993 München (DE)
(72) Erfinder: Bux, Hermann, 86559 Adelzhausen (DE); Käfer, Stefan, 81245 München (DE); Schommer, Stefan, 85716 Unterschleissheim (DE)
(74) Vertreter: Klunker . Schmitt-Nilson . Hirsch

(56) Entgegenhaltungen:
- EP-A- 1 003 011
- US-A- 4 931 964

## Beschreibung

Die Erfindung betrifft eine Fahrwerkvermessungseinrichtung mit Meßköpfen zur Bestimmung der Radstellungen der Räder eines Kraftfahrzeuges auf einem Meßplatz, wobei jeder Meßkopf wenigstens eine Kamera aufweist, die auf ein im Blickfeld der Kamera angeordnetes, in einer festen Beziehung zu dem Rad des Kraftfahrzeuges positioniertes Meßtarget ausgerichtet ist, und wobei die Bilder der Kamera von einer Auswertungseinheit ausgewertet werden, um die räumliche Lage des Meßtargets und damit des Rades bezüglich der Position der Kamera bzw. des Meßkopfes zu bestimmen.

Derartige sogenannte berührungslose Fahrwerk- oder Achsvermessungseinrichtungen sind beispielsweise aus EP 0 895 056, EP 0 943 890 und DE 197 57 763 A1 bekannt. Bei diesen Fahrwerkvermessungseinrichtungen müssen die Meßköpfe, die zur Bestimmung der Radstellungen der Räder des Kraftfahrzeuges auf dem Meßplatz dienen, vor der eigentlichen Messung in Bezug zueinander ausgerichtet werden, was in der Praxis ein Problem darstellt.

Bei der aus der EP 0 895 056 bekannten Fahrwerkmeßeinrichtung erfolgt die Ausrichtung der Meßköpfe untereinander dadurch, daß die Meßköpfe auf einem gemeinsamen Gestell an dem Meßplatz angeordnet sind, so daß die relative Lage der Meßköpfe untereinander bekannt ist. Allerdings sind die Meßköpfe verstellbar geführt, so dass an der Führung bereits Genauigkeitsprobleme auftreten. Eine derartige Anordnung hat noch den Nachteil, daß der Weg von den Meßköpfen zu den Meßtargets verhältnismäßig weit ist, so daß die Auflösung der Kameras ein Problem darstellt.

Bei der aus der EP 0 943 890 bekannten Fahrwerkmeßeinrichtung erfolgt die Ausrichtung der Meßköpfe untereinander dadurch, daß Bezugstargets an dem Meßplatz vorhanden sind mit deren Hilfe die Meßköpfe auszurichten sind. Da die Bezugstargest am Meßplatz vor dem Fahrzeug angeordnet sind, ist der Weg von den Bezugstargets zu den Meßköpfen bei den Hinterrädern sehr weit, so dass es schwierig ist, die erforderliche Genauigkeit bei der Kalibrierung die Meßköpfe zu erreichen.

Bei der aus der DE 197 57 763 A1 bekannten Fahrwerkmeßeinrichtung erfolgt die Ausrichtung der Meßköpfe untereinander dadurch, daß ein separater Rahmen mit Referenztargets zwischen den Meßköpfen und dem Fahrzeug angeordnet wird, wobei die Kalibrierung der Meßköpfe mit Hilfe der Bezugstargets erfolgt. Hier stört der Rahmen mit den Referenztargets bei dem Aufbau der Fahrwerkmeßeinrichtung und bei der Messung.

Es wurde auch bereits versucht, die Meßkameras selbst für die Kalibrierung der Meßköpfe zu benutzen und Referenztargets auf den quer zur Fahrrichtung des Kraftfahrzeuges gegenüberliegenden Meßköpfen anzubringen. Dabei ergibt sich das Problem, daß die Kamera, die sowohl zur Vermessung des ihr gegenüberliegenden Rades als auch zur Kalibrierung der relativen Lage der beiden gegenüberliegenden Meßköpfe dient, wegen der Brennweitenänderung bei jedem Meßgang zweimal kalibriert werden muß. Wenn eine derartige Kamera auch dazu verwendet wird, den Bezug auf den diagonal gegenüberliegenden Meßkopf herzustellen, sind drei Kalibrierungen der Kamera erforderlich, und derartige Kalibrierungen sind aufwendig.

Aus der EP 1 003 011 A1 ist eine optische Einrichtung zum Bestimmen der Relativpositionen von wenigstens zwei Objekten, wie bspw. Fahrzeugrädern, bekannt, die zwei optische Systeme zum Bestimmen der Position eines Objekts im Raum aufweisen, jedes bezüglich seines Beobachtungsrahmens. Ein optisches Referenzsystem umfasst ein Target, das von den anderen optischen Systemen in Abwesenheit der Objekte sichtbar ist. Die anderen optischen Systeme umfassen eine Vorrichtung zum Analysieren eines Bildes des Targets und eine Vorrichtung zum Positionieren des Targets bezüglich seines Beobachtungsrahmens, um so daraus die Position des Beobachtungsrahmens der anderen optischen Systeme bezüglich des Beobachtungsrahmens des optischen Referenzsystems abzuleiten, auf der Basis der Positionen des Targets bezüglich des Beobachtungsrahmens und des Targets bezüglich des Beobachtungsrahmens des optischen Referenzsystems.

Demgegenüber liegt der Erfindung die Aufgabe zugrunde, eine Fahrwerk- oder Achsvermessungseinrichtung bereitzustellen, die ohne ortsfestes Bezugssystem auskommt und bei der die Kalibrierung mit möglichst wenig Kalibrierungsarbeiten und Bauteilen ermöglicht wird.

Dazu ist bei einem von den Ansprüchen nicht erfassten Ausführungsbeispiel die Fahrwerkvermssungseinrichtung gekennzeichnet durch ein optisches, in den Meßköpfen integriertes Referenzsystem zur Kalibrierung der Meßköpfe der Fahrwerkvermessungseinrichtung bezüglich der Position der Meßköpfe zueinander. Durch ein derartiges Referenzsystem wird es in vorteilhafter Weise möglich, mobile Meßköpfe zu verwenden, die vor der eigentlichen Messung bezüglich der Positionen zueienander kalibriert werden.

Bei einem von den Ansprüchen nicht erfassten Ausführungsbeispiel ist die Fahrwerkvermessungseinrichtung ist dadurch gekennzeichnet, daß das Referenzsystem eine Referenzkamera auf einem der Meßköpfe auf einer Seite des Kraftfahrzeuges und ein Referenztarget auf den auf derselben Fahrzeugseite gegenüberliegenden Meßkopf sowie Referenztargets auf der Innenseite eines vorderen und eines hinteren Meßkopfes umfaßt, die im Blickfeld der Meßkameras auf den gegenüberliegenden Meßköpfen liegen. Diese Anordnung hat den Vorteil, daß die Meßköpfe je nach Radstand und Spurweite frei positionierbar sind, wobei die Meßkameras bei der Messung die Meßtargets im Blickfeld und die Meß- und Referenzkameras die Meß- bzw. Referenztargets im Blickfeld haben, wenn kein Fahrzeug in dem Meßplatz vorhanden ist. Gegenüber dem System bestehend aus den Meßkameras und Meßtargets sind nur zwei zusätzliche Kameras und vier zusätzliche Targets erforderlich. Die Meßköpfe sind diagonal tauschbar, und es kann eine Selbstkontrolle durch Rundummessung durchgeführt werden. Zur Kalibrierung muß das Fahrzeug aus dem Meßfeld herausgefahren werden.

Bei einem von den Ansprüchen nicht erfassten Ausführungsbeispiel ist die Fahrwerkvermessungseinrichtung dadurch gekennzeichnet, daß das Referenzsystem eine Referenzkamera an einem der vorderen Meßköpfe und ein Referenztarget an dem gegenüberliegenden Meßkopf aufweist, wobei Kamera und Referenztarget vor oder hinter dem Kraftfahrzeug liegen, und daß das Referenzsystem ferner eine Referenzkamera in einem der seitlichen Meßköpfe und ein Referenztarget auf dem auf derselben Fahrzeugseite gegenüberliegenden Meßkopf aufweist. Hier ergibt sich der Vorteil, daß die Meßköpfe je nach Radstand und Spurweite frei positionierbar sind, solange sie sich gegenseitig im Blickfeld haben. Es sind nur drei Referenzkameras und Targets notwendig, um das Referenzsystem aufzubauen.

Bei einem von den Ansprüchen nicht erfassten Ausführungsbeispiel ist die Fahrwerkvermessungseinrichtung dadurch gekennzeichnet, daß ferner an den hinteren Meßköpfen eine Referenzkamera an einem Meßkopf und ein Referenztarget an dem gegenüberliegenden Meßkopf angeordnet ist. Dabei ist vorteilhaft, daß die Meßköpfe je nach Radstand und Spurweite frei positionierbar sind, solange sie sich gegenseitig im Blickfeld haben. Die Meßköpfe sind diagonal tauschbar, und es ist eine Selbstkontrolle der Fahrwerkmeßeinrichtung durch Rundummessung des Bezugssystems möglich, wie es bei den sogenannten Achtgeber-Achsmeßgeräten der Fall ist.

Bei einem von den Ansprüchen nicht erfassten Ausführungsbeispiel ist die Fahrwerkvermessungseinrichtung gekennzeichnet durch ein optisches Strahlteiler-oder Spiegelsystem, das zwischen je einem Referenztarget und je einer Meßkamera derart angeordnet ist, dass die Referenztargts von der Meßkamera beobachtet werden. Da durch diese Anordnung Referenzkameras durch ein optisches Strahlteiler- oder Spiegelsystem ersetzt werden, hat diese Anordnung den Vorteil, daß durch das Strahlteiler- oder Spiegelsystem jeweils eine Referenzkamera eingespart wird, was die gesamte Einrichtung kostengünstiger macht.

Bei einem von den Ansprüchen nicht erfassten Ausführungsbeispiel ist die Fahrwerkvermessungseinrichtung dadurch gekennzeichnet, daß das Referenzsystem an den seitlichen Meßköpfen je eine CCD-Referenzkamera, die auf den gegenüberliegenden Meßkopf auf der gleichen Seite gerichtet ist, und an dem gegenüberliegenden Meßkopf je mindestens zwei LED-Elemente als Referenztargets aufweist, und daß an den vorderen und/oder hinteren Meßköpfen jeweils zusätzliche CCD-Referenzkameras und an dem gegenüberliegenden Meßköpfen LED-Elemente als Referenztargets angeordnet sind. Bei dieser Anordnung sind nur einfache Zeilenkameras und LED-Elemente notwendig, während die Meßköpfe frei positionierbar und diagonal tauschbar sind.

Bei einem von den Ansprüchen nicht erfassten Ausführungsbeispiel ist die Fahrwerkvermessungseinrichtung dadurch gekennzeichnet, daß drei LED-Elemente als Referenztarget vorgesehen sind. Hier ist jeweils nur eine CCD-Referenzkamera pro Meßkopf notwendig, was wiederum zur Kostenersparnis führt.

Die Erfindung ist in den Ansprüchen 1 bis 4 definiert.

Eine vorteilhafte Ausgestaltung der erfindungsgemäßen Fahrwerkvermessungseinrichtung ist dadurch gekennzeichnet, daß das Referenzsystem Referenztargets an der Innenseite der Meßköpfe und eine optische Referenzeinheit zwischen den Referenztargets aufweist, die auf die Referenztargets ausgerichtet ist. Durch diese Anordnung wird eine zentrale Referenzeinheit zur Kalibrierung der Fahrwerkvermessungseinrichtung geschaffen, die nach ihrer Einrichtung und Kalibrierung jederzeit zur Verfügung steht. Die eigentlichen Meßköpfe zur Vermessung der Radstellungen können dabei verhältnismäßig einfach ausgeführt werden. Optisch können die Tiefenschärfebereiche von Meßsystem und Referenzsystem getrennt festgelegt und kalibriert werden, so daß eine Nachkalibrierung relativ selten erforderlich ist. Die Meßköpfe sind bei dieser Anordnung wiederum diagonal tauschbar.

Eine vorteilhafte Ausgestaltung der erfindungsgemäßen Fahrwerkvermessungseinrichtung ist dadurch gekennzeichnet, daß die Referenzoptik vier jeweils auf die Referenztargets gerichtete Kameras umfaßt. Diese Anordnung hat den Vorteil, daß nur eine einmalige Justierung des Referenzsystems notwendig ist, und daß keine bewegten Teile in der Referenzeinheit vorhanden sind.

Eine vorteilhafte Ausgestaltung der erfindungsgemäßen Fahrwerkvermessungseinrichtung ist dadurch gekennzeichnet, daß die Referenzoptik eine Referenzkamera und ein Spiegel- oder Strahlteilersystem umfaßt, das das Blickfeld der Referenzkamera auf die Referenztargets richtet. Dadurch können gegenüber dem vorhergehenden Ausführungsbeispiel drei Kameras eingespart werden.

Eine vorteilhafte Ausgestaltung der erfindungsgemäßen Fahrwerkvermessungseinrichtung ist dadurch gekennzeichnet, daß die Referenzoptik eine drehbar gelagerte Referenzkamera umfaßt. Dafür können die eigentlichen Meßköpfe zur Vermessung der Räder verhältnismäßig einfach ausgeführt werden, und die Tiefenschärfenbereiche von Meßsystem und Referenzsystem können getrennt festgelegt und kalibriert werden. Da nur eine Kamera für die Referenzeinheit erforderlich ist, wird gegenüber dem vorhergehenden Ausführungsbeispiel eine Kostenersparnis erzielt.

Ausführungsbeispiele der Erfindung werden nun anhand der beiliegenden Zeichnungen beschrieben. Bei den Figuren 1 bis 6 handelt es sich um Beispiele, die in den Ansprüchen nicht erfasst sind, aber das Verständnis der Erfindung erleichtern. Es zeigen:
Fig. 1 eine schematische Darstellung einer Fahrwerkvermessungseinrichtung mit Referenztargets an den Meßköpfen und Referenzkameras an den Meßköpfen;
Fig. 2 eine schematische Darstellung einer Fahrwerkvermessungseinrichtung mit einer Referenzkamera und einem Referenztarget auf Auslegern der vorderen Meßköpfe;
Fig. 3 eine schematische Darstellung einer Fahrwerkvermessungseinrichtung mit einer Referenzkamera und einem gegenüberliegenden Referenztarget auf Auslegern an den vorderen Meßköpfen und eine ebensolche Anordnung auf den hinteren Meßköpfen;
Fig. 4 ein Spiegelsystem in den vorderen Meßköpfen;
Fig. 5 eine schematische Darstellung einer Fahrwerkvermessungseinrichtung mit einer Referenzeinheit aus CCD-Kameras und LED-Elementen;
Fig. 6 eine schematische Darstellung einer Fahrwerkvermessungseinrichtung mit CCD-Referenzkameras und je drei LED-Elementen als Referenztarget;
Fig. 7 eine schematische Darstellung einer Fahrwerkvermessungseinrichtung mit einer zusätzlichen Referenzeinheit zentral zwischen den Meßköpfen; und
Fig. 8 eine schematische Darstellung einer Fahrwerkvermessungseinrichtung mit einer anderen Ausführungsform einer zentralen Referenzeinheit.

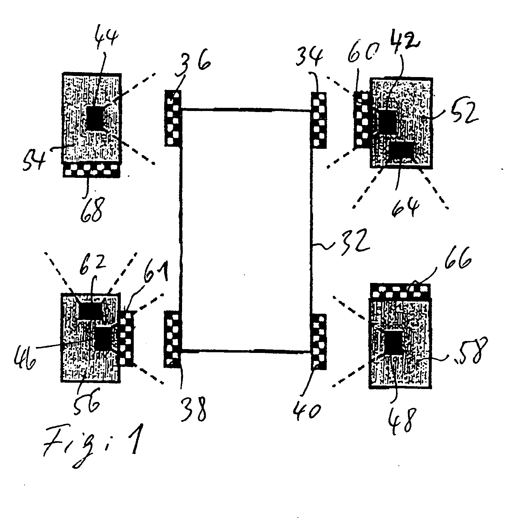

Fig. 1 zeigt eine Fahrwerkvermessungseinrichtung mit einem in den Meßköpfen integrierten Referenzsystem. An einem schematisch dargestellten Kraftfahrzeug 32 sind Meßtargets 34, 36, 38, 40 an den jeweiligen Rädern angeordnet. Die Meßtargets werden von Meßkameras 42, 44, 46 bzw. 48 beobachtet, wenn die Fahrwerkvermessung durchgeführt wird. Die Meßkameras 42, 44, 46,48 liegen in Meßköpfen 52, 54, 56, 58.

Die Frontseite der Fahrzeuges 32 ist, wie die Frontseite der Fahrzeuge bei den folgenden Ausführungsbeispielen, in den Zeichnungen nach oben gerichtet, sodass die oberen Meßköpfe als vordere Meßköpfe oder Meßköpfe an den Vorderrädern und die unteren Meßköpfe als hintere Meßköpfe oder Meßköpfe an den Hinterrädern bezeichnet werden.

An den Meßköpfen 52 und 56 sind Referenztargets 60, 61 angeordnet, die jeweils im Blickwinkel der Meßkamera 44 bzw. 48 liegen, wenn kein Fahrzeug im Meßplatz vorhanden ist. Das Referenzsystem wird vervollständigt durch Referenzkameras 62, 64 in den Meßköpfen 54, 56 und Referenztargets 66, 68 an den Meßköpfen 58, 54. Die Targets 66, 68 liegen im Blickwinkel der Referenzkameras 64 bzw. 62.

Bei dieser Anordnung wird eine Selbstkalibrierung der Meßköpfe vor der Fahrwerkvermessung durchgeführt. Durch eine Kombination der Meßköpfe mit den Meßtargets und der Referenzköpfe mit den Referenztargets kann die Position und Winkelstellung der einzelnen Meßköpfe zueinander bestimmt werden, solange sich kein Kraftfahrzeug auf dem Meßplatz befindet. Nach der Kalibrierung wird das Fahrzeug dann in den Meßplatz eingefahren und vermessen.

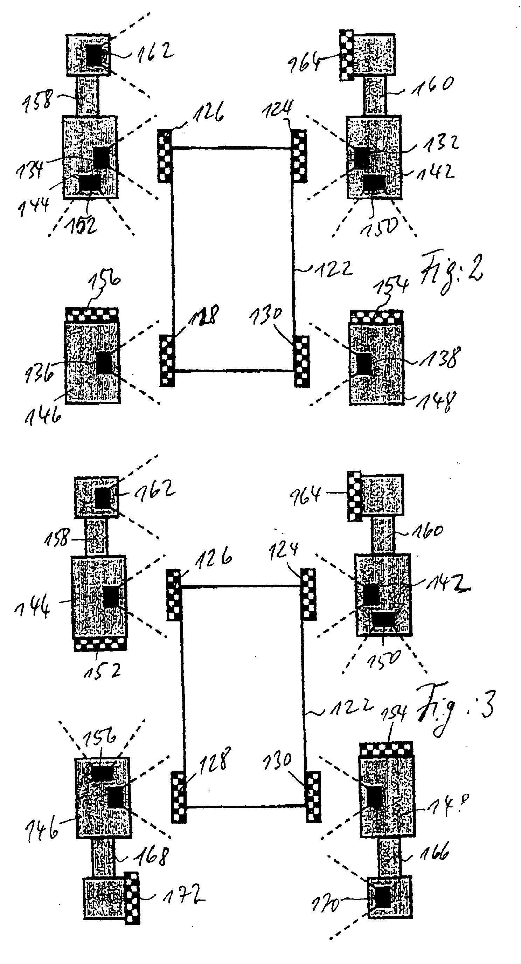

Fig. 2 zeigt eine Fahrwerkvermessungseinrichtung mit zusätzlichen optischen Einrichtung an den Meßköpfen. Ein Fahrzeug 122 umfaßt Meßtargets 124, 126, 128, 130 an seinen Rädern, wobei die Meßtargets im Blickwinkel von Meßkameras 132, 134, 136 bzw. 138 liegen. Die Meßkameras sind in Meßköpfen 142, 144, 146, 148 angeordnet. In den vorderen Meßköpfen 142, 144 sind Referenzkameras 150, 152 angeordnet, die Referenztargets 154, 156 im Blickfeld haben, die an den hinteren Meßköpfen 148 bzw. 146 angeordnet sind. Über Ausleger 158, 160 sind an den vorderen Meßköpfen 144 bzw. 142 eine Referenzkamera 162 bzw. ein Referenztarget 164 angeordnet. Bei dieser Anordnung stellen die Referenzkameras 150, 152 über die Referenztargets 154, 156 den Bezug zwischen den vorderen Meßköpfen 142, 144 und den hinteren Meßköpfen 146, 148 her, während die Referenzkamera 162 und das Referenztarget 164 den Bezug quer zur Fahrtrichtung des Fahrzeugs zwischen den seitlichen Meßköpfen herstellt. Bei dieser Anordnung erfolgt die Selbstkalibrierung der Meßköpfe während einer Fahrwerkvermessung.

Fig. 3 zeigt eine weitere Ausgestaltung des Ausführungsbeispiels von Fig. 2. Die Fahrwerkvermessungseinrichtung nach Fig. 3 hat zwei zusätzliche Ausleger 166, 168 an den hinteren Meßköpfen 148 bzw. 146, auf denen eine Referenzkamera 170 und ein Referenztarget 172 angeordnet sind. Mit dieser Anordnung ist eine sogenannte Rundummessung möglich, so daß die Justage der Fahrwerkvermessungseinrichtung einer Selbstkontrolle unterworfen werden kann.

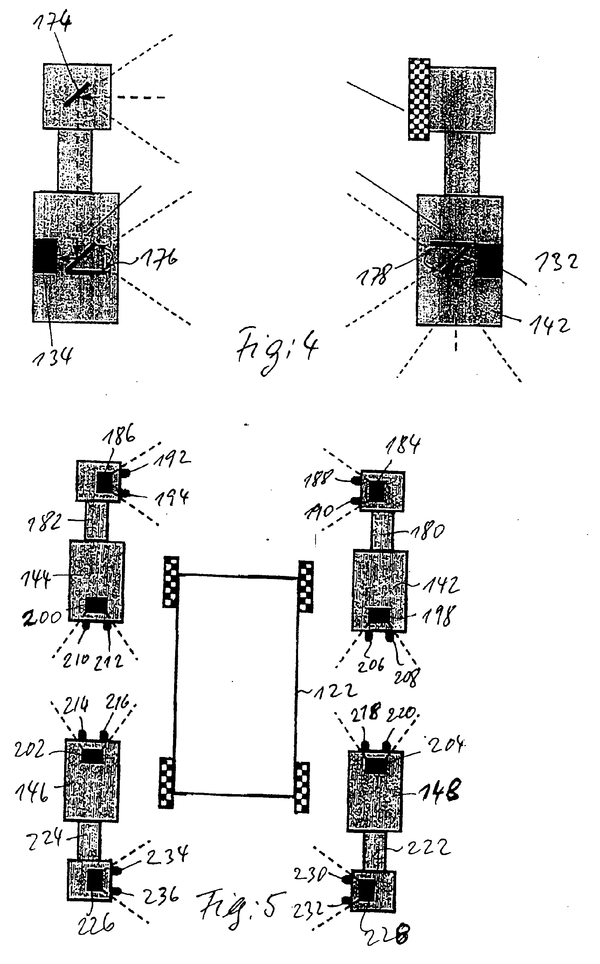

Fig. 4 zeigt ein Spiegelsystem, durch das pro Meßkopf der in Fig. 3 gezeigten Art eine Kamera eingespart bzw. durch das Spiegelsystem ersetzt wird. So wird bei dem Meßkopf 144 die Kamera 162 von Fig. 3 eingespart, während in dem Meßkopf 142 die Kamera 150 von Fig. 3 einspart wird. Dazu ist in dem Meßkopf 144 an dem Ausleger 158 ein Spiegelsystem 174 angeordnet, und in dem Meßkopf 144 selbst ist ein Kippspiegelsystem 176 vorgesehen, das den Strahlengang der Meßkamera 134 von einem Strahlengang zu dem Spiegelsystem 174 zu einem Strahlengang zu dem gegenüberliegenden Meßtarget umschaltet. In dem Meßkopf 142 ist ein Kippspiegelsystem 178 vorgesehen, das den Strahlengang der Meßkamera 132 zwischen einem Strahlengang zu dem Meßtarget und einem Strahlengang zu dem Referenztarget umschaltet.

Die Anordnung der Fahrwerkvermessungseinrichtung nach Fig. 5 entspricht der von Fig. 3, wobei in Fig. 5 zur Vereinfachung die Meßkameras zur Vermessungen der einzelnen Räder nicht dargestellt sind. Gemäß Fig. 5 haben die vorderen Meßköpfe 142, 144 Ausleger 180, 182, an denen jeweils eine Referenzkamera 184, 186, bestehend aus CCD-Zeilen, und je zwei LED-Elemente 188, 190 bzw. 192, 194. Die LED Elemente 188, 190 bfw. 192,194 sind jeweils im Blickfeld der Referenzkameras 186 bzw. 184 angeordnet. Mit einer derartigen Anordnung läßt sich in bekannter Weise die Winkelstellung der Meßköpfe 142, 144 quer zur Fahrtrichtung des Fahrzeuges bestimmen. Eine entsprechende Anordnung ist zwischen den seitlich am Fahrzeug einander gegenüberliegenden Meßköpfen 142, 146 bzw. 144, 146 vorgesehen. Danach sind in den Meßköpfen 142, 144, 146, 148 jeweils Referenzkameras (CCD-Zeilen) 198, 200, 202, 204 und LED-Elemente 206, 208; 210, 212; 214, 216; 218, 220 angeordnet, die jeweils im Blickfeld der gegenüberliegenden Referenzkamera liegen.

Bei der Anordnung der Fahrwerkvermessungseinrichtung nach Fig. 5 ist eine entsprechende Anordnung zu der Anordnung auf der Vorderseite auch auf Auslegern 222, 224 an den hinteren Meßköpfen 146, 148 vorgesehen. An dem Meßkopf 146 ist eine Referenzkamera (CCD-Zeile) 226 und an dem Meßkopf 148 eine Referenzkamera 228 vorgesehen. Im Blickfeld der Referenzkamera 126 liegen zwei LED-Elemente 230, 232, und im Blickfeld der Referenzkamera 228 liegen zwei LED-Elemente 234, 236. Dadurch, daß jeweils zwei LED-Elemente einer Referenzkamera gegenüberliegen, kann der Abstand zwischen den Meßköpfen zueinander bestimmt werden. Die Lage jedes Meßkopfes zur Senkrechten kann durch ein Pendelsystem ermittelt werden. Bei dieser Anordnung ist vorteilhaft, daß einfache Zeilenkameras für die Referenzkameras und LED-Elemente verwendet werden können. Ferner können die Meßköpfe frei positioniert und diagonal ausgetauscht werden.

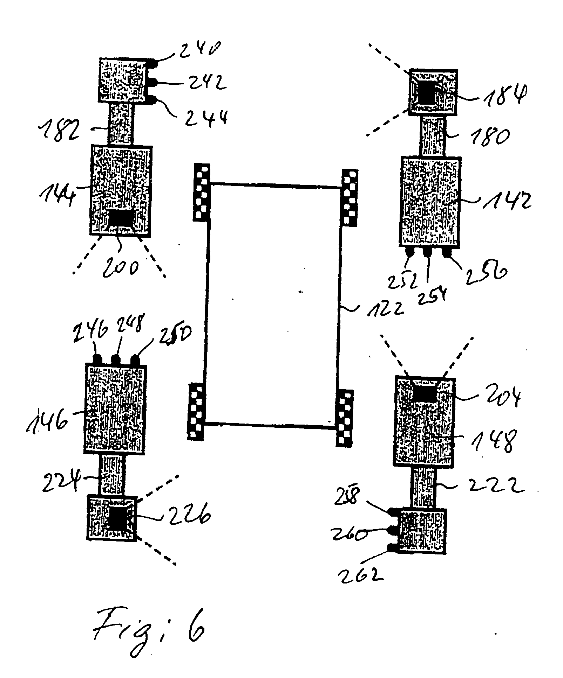

Fig. 6 ist eine weitere Ausführungsform des Beispiels von Fig. 5, wobei statt zwei LED-Elementen drei LED-Elemente pro Referenzkamera vorgesehen sind. Dadurch kann je eine Referenzkamera pro Meßkopf entfallen. So liegen der Referenzkamera 184 auf dem Ausleger 180 drei LED-Elemente 240, 242, 244 an dem Ausleger 182 des Meßkopfes 144 gegenüber. Der Referenzkamera 200 an dem Meßkopf 144 liegen drei LED-Elemente 246, 248, 250 auf dem Meßkopf 246 gegenüber. Der Referenzkamera 204 an dem Meßkopf 148 liegen drei LED-Elemente 252, 254, 256 gegenüber. Schließlich liegen der Referenzkamera 226 an dem Ausleger 224 drei LED-Elemente 258, 260, 262 auf dem Ausleger 222 gegenüber.

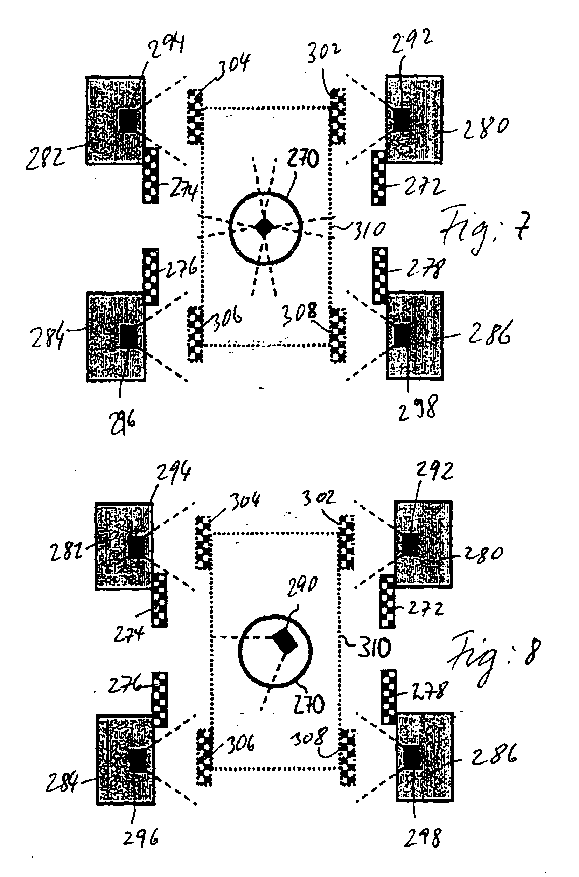

Fig. 7 zeigt eine Fahrwerkvermessungseinrichtung mit einer optischen Referenzeinheit 270, die zwischen Referenztargets 272, 274, 276, 280 in etwa in der Mitte der Vermessungseinrichtung angeordnet ist. Die Referenztargets sind an der Innenseite der Meßköpfe 280, 282, 284, 286 angeordnet. Die Referenzeinheit 270 umfaßt entweder vier ortfest angeordnete Kameras oder eine Kamera mit zusätzlicher Spiegeloptik, um alle Referenztargets an den Meßköpfen ohne Drehung der Referenzeinheit zur Kalibrierung erfassen zu können.

Fig. 8 zeigt eine abgewandelte Ausführungsform der Einrichtung nach Fig. 7, wobei die Referenzeinheit 270 eine drehbar gelagerte Kamera 290 aufweist, mit der die Referenztargets 272, 274, 276, 278 beobachtet werden können.

Im übrigen sind in den beiden Ausführungsbeispielen der Figuren 7 und 8 Meßkameras 292, 294, 296, 298 vorgesehen, die jeweils Meßtargets 302, 304, 306, 308, die an den Rädern eines Kraftfahrzeuges 310 angeordnet sind, erfassen.

## Patentansprüche

1. Fahrwerksvermessungseinrichtung mit einem optischen Referenzsystem, für ein auf einem Messplatz stehendes Kraftfahrzeug (310),
wobei die Fahrwerksvermessungseinrichtung vier an den Rädern des Kraftfahrzeugs (310) anbringbare Messtargets (302, 304, 306, 308) und vier Messköpfe (280, 282, 284, 286) aufweist, die an dem Messplatz gegenüber den Messtargets (302, 304, 306, 308) angeordnet sind und wobei die Messköpfe weiterhin Messkameras (292, 294, 296, 298) zum Erfassen der an den Rädern des Kraftfahrzeugs (310) angeordneten Messtargets (302, 304, 306, 308) aufweisen,
wobei das optische Referenzsystem an den Innenseite der Messköpfe (280, 282, 284, 286) angeordnete Referenztargets (272, 274, 276, 278) sowie eine zwischen den Referenztargets (272, 274, 276, 278) in etwa in der Mitte der Fahrwerksvermessungseinrichtung angeordnete optische Referenzeinheit (270) aufweist, die dafür ausgebildet ist, die Referenztargets (272, 274, 276, 278) zur Kalibrierung zu erfassen.

2. Fahrwerksvermessungseinrichtung nach Anspruch 1,
**dadurch gekennzeichnet, dass**
die optische Referenzeinheit (270) vier ortsfest angeordnete Kameras umfasst.

3. Fahrwerksvermessungseinrichtung nach Anspruch 1,
**dadurch gekennzeichnet, dass**
die optische Referenzeinheit (270) eine Kamera mit zusätzlicher Spiegeloptik umfasst.

4. Fahrwerksvermessungseinrichtung nach Anspruch 1,
**dadurch gekennzeichnet, dass**
die optische Referenzeinheit (270) eine drehbar gelagerte Kamera (290) umfasst.

## Claims

1. Wheel alignment apparatus comprising an optical reference system, for a motor vehicle (310) standing on a measurement site,
wherein the wheel alignment apparatus comprises four measurement targets (302, 304, 306, 308) to be mounted to the wheels of the motor vehicle (310) and four measurement heads (280, 282, 284, 286), that are arranged at the measurement site opposite to the measurement targets (302, 304, 306, 308) and wherein the measurement heads further comprise measurement cameras (292, 294, 296, 298) for capturing the measurement targets (302, 304, 306, 308) being mounted to the wheels of the motor vehicle (310),
wherein the optical reference system comprises reference targets (272, 274, 276, 278) arranged at the inside of the measurement heads (280, 282, 284, 286) and a reference unit (270) arranged between the reference targets (272, 274, 276, 278) approximately in the middle of the wheel alignment apparatus, said reference unit (270) configured so as to capture the reference targets (272, 274, 276, 278) for calibration.

2. Wheel alignment apparatus of claim 1, **characterized in that** the optical reference unit (270) comprises four stationary cameras.

3. Wheel alignment apparatus of claim 1, **characterized in that** the optical reference unit (270) comprises a camera with an additional mirror optic means.

4. Wheel alignment apparatus of claim 1, **characterized in that** the optical reference unit (270) comprises a camera (290), said camera (290) being rotatably supported.

## Revendications

1. Dispositif de mesure de châssis avec un système de référence optique pour un véhicule automobile (310) se trouvant sur un emplacement de mesure,
dans lequel le dispositif de mesure de châssis comporte quatre cibles de mesure (302, 304, 306, 308) pouvant être placées sur les roues du véhicule automobile (310), et quatre têtes de mesure (280, 282, 284, 286) qui sont disposées à l'emplacement de mesure en face des cibles de mesure (302, 304, 306, 308), et les têtes de mesure comportant en outre des caméras de mesure (292, 294, 296, 298) pour enregistrer les cibles de mesure (302, 304, 306, 308) disposées sur les roues du véhicule automobile (310),
dans lequel le système de référence optique comporte des cibles de référence (272, 274, 276, 278) disposées sur le côté intérieur des têtes de mesure (280, 282, 284, 286) ainsi qu'une unité de référence optique (270) disposée entre les cibles de référence (272, 274, 276, 278) à peu près au milieu du dispositif de mesure de châssis, laquelle est conçue de manière à enregistrer les cibles de référence (272, 274, 276, 278) pour l'étalonnage.

2. Dispositif de mesure de châssis selon la revendication 1,
**caractérisé en ce que**
l'unité de référence optique (270) comprend quatre caméras disposées chacune en un emplacement fixe.

3. Dispositif de mesure de châssis selon la revendication 1,
**caractérisé en ce que**
l'unité de référence optique (270) comprend une caméra avec optique à miroir supplémentaire.

4. Dispositif de mesure de châssis selon la revendication 1,
**caractérisé en ce que**
l'unité de référence optique (270) comprend une caméra (290) montée tournante.
